# EUROPEAN PATENT SPECIFICATION

(11) **EP 2 156 297 B1**
(45) Date of publication and mention of the grant of the patent: **26.12.2018**
(21) Application number: 08770386.4
(22) Date of filing: 06.06.2008
(51) Int. Cl.: G06F 17/30, G06F 12/00

(54) **CACHED CONTENT CONSISTENCY MANAGEMENT**
KONSISTENZVERWALTUNG FÜR ZWISCHENGESPEICHERTE INHALTE
GESTION DE COHÉRENCE DE CONTENU MIS EN MÉMOIRE CACHE

(30) Priority: 06.06.2007 US 759155
(43) Date of publication of application: 24.02.2010
(73) Proprietor: Sony Interactive Entertainment Inc., Tokyo 108-8270 (JP)
(72) Inventor: MARR, James E., Foster City, California 94044 (US); WHITE, Payton R., Foster City, California 94404 (US); DETWILER, Stephen C., Foster City, California 94404 (US); VASS, Attila, Foster City, California 94404 (US)
(74) Representative: D Young & Co LLP
(86) International application number: PCT/US2008/066181
(87) International publication number: WO 2008/154424

(56) References cited:
- WO-A2-2006/078999
- US-A- 5 835 911
- US-A- 6 167 567
- US-A1- 2002 004 855
- US-A1- 2003 055 889
- US-A1- 2004 001 476
- US-A1- 2006 136 964

## Description

### CROSS-REFERENCE TO RELATED APPLICATION

This application claims the benefit of priority of commonly assigned U.S. Patent Application 11/759,155, filed June 6.

This application is related to commonly assigned U.S. Patent Application 11/759,143, filed June 06,2007.

### FIELD OF THE INVENTION

This invention is related to electronic computing and more particularly to management of cached content in an interactive environment.

### BACKGROUND OF THE INVENTION

The growth of the Internet and the popularity of interactive entertainment such as video games have led to opportunities for advertising within video games. At first, advertisements were statically placed within video games. As video game consoles with internet connectivity became available, it became possible to update advertisements appearing within video games. This led to many avenues for game console manufacturers and video game companies to generate revenue from the sale of advertising space within video games to one or more advertisers. Advertising content often varies based on the nature of the video game title. In addition, certain advertising spaces within the game may be more valuable than others. Furthermore, advertising campaigns may change over time with certain advertisements being phased out as others are phased in. It is therefore useful to have some system for determining which advertisements are to be placed in particular spaces within particular video games during particular periods of time.

Conventionally, a video game console may connect to a distribution server that determines what advertisement to place in a particular advertising space within the game based on considerations such as the game title and the time of day, month year, etc. Often the actual advertising content is stored on a separate server known as a content server. In such a case, the distribution server instructs the game console to contact a particular content server and to request one or more content file or files referred to herein as content assets that a video game console may use to generate the content for a particular advertising space. The console can then directly contact the content server and request the designated content assets. These may provide that advertisements promoting a products or services of the advertiser's competitors will not be displayed in a particular media channel at a particular time. As an example, this may mean that advertisements for competing companies may not be shown in the same frame of a video game. There are numerous possible permutations on this example. Due to the dynamic nature of the distribution of information over computer networks, advertising displayed within video games may be updated quite rapidly. It is desirable to avoid conflicts between advertisements or other content when implementing updates. Previously proposed arrangements are disclosed in US 5835911 A, US2004/0001476 A1, US2002/0004855 A1, US2006/0136964 A1 and US2003/0055889 A1.

It is within this context that embodiments of the invention arise. The object of the invention is solved by the features of the independent claims. Further embodiments are the subject-matter of the dependent claims.

### BRIEF DESCRIPTION OF THE DRAWINGS

The teachings of the present invention can be readily understood by considering the following detailed description of example embodiments in conjunction with the accompanying drawings, in which:
FIG. 1 is a schematic diagram of an auxiliary content distribution system according to an embodiment of the present invention.
FIG. 2A is a flow diagram illustrating the problem of cached consistency management in the prior art.
FIG. 2B is a flow diagram illustrating an example of cached content consistency management according to an embodiment of the present invention.
FIG. 3 is a block diagram illustrating a client device according to an embodiment of the present invention.
FIG. 4 is a block diagram illustrating a distribution server according to an embodiment of the present invention.

### DESCRIPTION OF THE SPECIFIC EMBODIMENTS

Although the following detailed description contains many specific details for the purposes of illustration, anyone of ordinary skill in the art will appreciate that many variations and alterations to the following details are within the scope of the invention. Accordingly, the exemplary embodiments of the invention described below are set forth without any loss of generality to, and without imposing limitations upon, the claimed invention.

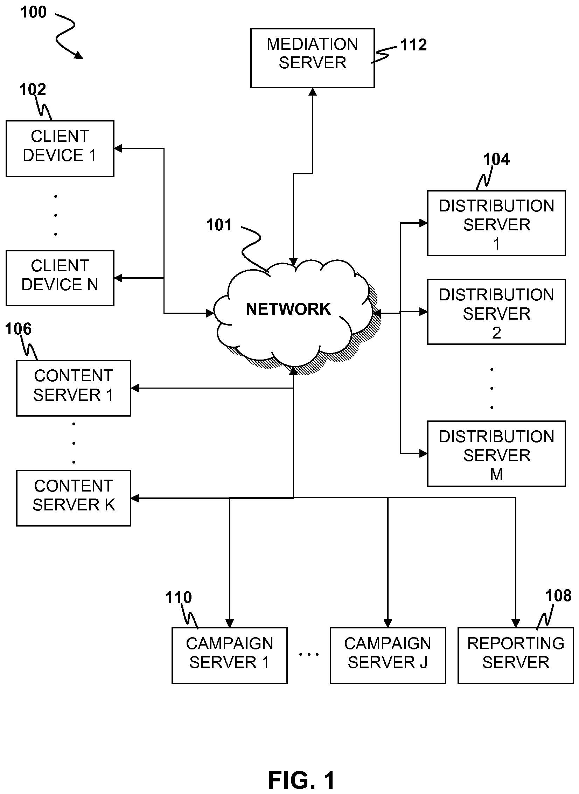

As seen in FIG. 1 a cached content consistency management system **100** may include one or more client devices **102** and one or more distribution servers **104**. The client devices **102** and distribution servers **104** may be configured to communicate with each other over a network **101**. By way of example, and without loss of generality, the network **101** may be a bi-directional digital communications network. The network **101** may be a local area network or wide area network such as the Internet. The network **101** may be implemented, e.g., using an infrastructure, such as that used for CATV bi-directional networks, ISDN or xDSL high speed networks to enable network connections for implementing certain embodiments of the present invention.

By way of example, and without limitation, the client devices **102** may be video game consoles. Examples of commercially game consoles include the Xbox® from Microsoft Corporation of Redmond Washington, the Wii® from Nintendo Company, Ltd of Kyoto, Japan and PlayStation® devices, such as the PlayStaion3 from Sony Computer Entertainment of Tokyo, Japan. Xbox® is a registered trademark of Microsoft Corporation of Redmond, Washington. PlayStation® is a registered trademark of Kabushiki Kaisha Sony Computer Entertainment of Tokyo, Japan. Wii® is a registered trademark of Nintendo Company, Ltd of Kyoto, Japan. Alternatively, the client devices may be any other type of network capable device. Such devices include, but are not limited to cellular telephones, personal computers, laptop computers, television set-top boxes, portable internet access devices, portable email devices, portable video game devices, personal digital assistants, digital music players, and the like. Furthermore, the client devices **102** may incorporate the functions of two or more of the devices in the examples previously listed.

As used herein the term content refers to images, video, text, sounds, etc. presented on a display in a simulated environment. Such content may include content that is an integral part of the simulated environment, e.g., background scenery, avatars, and simulated objects that are used within the simulated environment. Content may also include auxiliary content that is not integral to the simulated environment, but which may appear within it. As used herein, the term auxiliary content means content, e.g., in the form of text, still images, video images, animations, sounds, applets, three-dimensional content, etc, that is provided gratuitously to the client device **102**. By way of example, and without limitation, within the context of an interactive environment, e.g., a video game, three-dimensional content may include information relating to images or simulations involving three dimensions. Examples of such information may range from static geometry through to a subset of a game level or a full game level with all of the expressive interactivity of the game title itself. Examples of auxiliary content include advertisements, public service announcements, software updates, interactive game content, and the like.

Content, including auxiliary content, may be generated by the client devices from content assets. As used herein, the term "content assets" refers to information in a format readable by the client device that the client device may use to generate the content. Content, including auxiliary content, and corresponding content assets may be created "on the fly", i.e., during the course of a simulated environment session.

The auxiliary content may appear at one or more pre-defined locations or instances of time in a simulated environment generated by the client device **102**. As used herein, the term "simulated environment" refers to text, still images, video images, animations, sounds, etc, that are generated by the client device **104** during operation initiated by a user of the device. By way of example, and without limitation, a simulated environment may be a landscape within a video game that is represented by text, still images, video images, animations, sounds that the client device **104** presents to the user.

The client devices **104** may retrieve the auxiliary content assets from one or more content servers **106**. The distribution servers **104** may determine which particular items of auxiliary content belong in particular spaces or time instances within the simulated environments generated by the client devices **104**. Each distribution server **104** may be responsible for distribution of auxiliary content to client devices **102** in different regions.

In certain implementations, e.g., where the cached content includes advertising content, the system may optionally include one or more content servers **106** and one or more reporting servers **108** one or more campaign management servers **110**. In some implementations, the system may include an optional mediation server **112** to facilitate distribution of content. Each client device **102** may be configured to submit input to the mediation server **112**. The mediation server **112** may act as an intermediary between the client devices **102** and the distribution servers **104**. By way of example, the mediation server **112** may determine which distribution server **104** handles auxiliary content distribution for a client device in a particular region. The mediation server **112** may be configured to receive the input from a client device **102** and send contact information for a distribution server **104** to the client device **102** in response to the input. Each client device **102** may be further configured to receive the contact information from the mediation server **112** and use the contact information to contact one or more of the distribution servers **104** with a request for auxiliary content information for an auxiliary content space. The distribution servers **104** may be configured to service requests for auxiliary content information from the one or more client devices **102**. The mediation server **112** may have a pre-existing trust relationship with each client device **102**. By way of example, the trust relationship may be established using Public key cryptography, also known as asymmetric cryptography. The pre-existing trust relationship between the client device **102** and mediation server **112** may be leveraged to delegate management of multiple distribution servers **104**. The use of mediation servers in conjunction with auxiliary content distribution is described in commonly assigned U.S. Patent Application 11/759,143, to James E. Marr et al., entitled "MEDIATION FOR AUXILIARY CONTENT IN AN INTERACTIVE ENVIRONMENT" which has been incorporated herein by reference.

In some embodiments, the system **100** may further include one or more reporting servers **108** coupled to the network **101**. Client devices **102** may report user activity related to the auxiliary content. For example, in the case of auxiliary content in the form of advertising, the client devices **104** may be configured to report information to the reporting server **108** relating to whether an advertisement was displayed and/or made an impression on the user. Examples of such impression reporting are described, e.g., in commonly-assigned U.S. Patent Application 11/241,229, filed September 30, 2005, the entire contents of which are incorporated herein by reference. In some embodiments, the mediation server **112** may also provide a URL for a reporting server **108** and a cryptographic key for communicating with the reporting server.

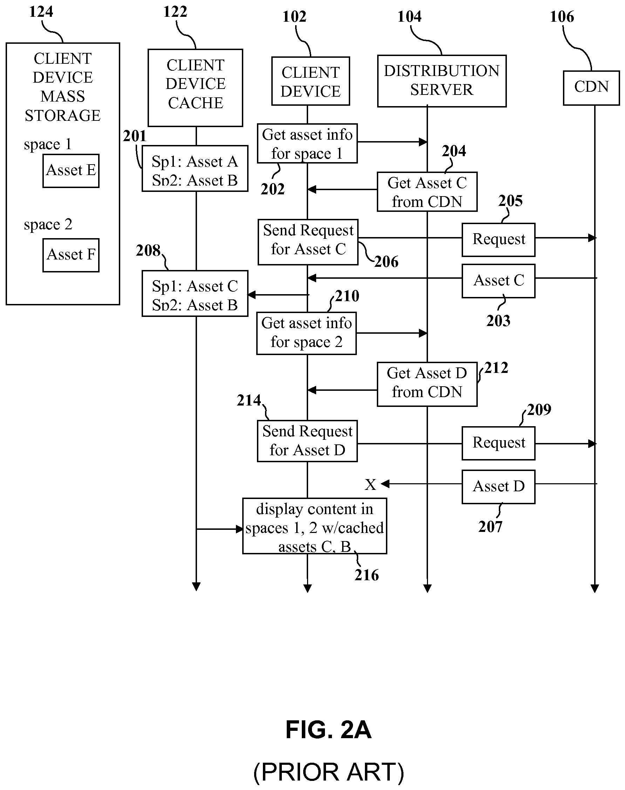

FIG. 2A illustrates the problem of managing cached content as often encountered in the prior art. In this example, the client device **102** has a cache **122** that contains content assets for first and second content spaces Sp1, Sp2, within a simulated environment.

As used herein, the term cache generally refers to a special high-speed storage mechanism. By way of example, the cache **122** may be a reserved section of a main memory associated with the client device **102** or an independent high-speed storage device associated with the client device. Initially, the cache **122** may contain asset A for the first space Sp1 and asset B for the second space Sp2, as indicated at **201**. The content assets stored in the cache **122** may be updated from time to time. To update the content assets, the client device **102** contacts the distribution server over the network **101** with a request for asset information as indicated at **202**. The distribution server responds the request with asset information, as indicated at **204**. The asset information may identify update assets, e.g., by filenames or some other identifier, and a source of the update assets. The source, e.g., a content server **106** may be identified by a network address, e.g., a URL. In this example, the distribution server determines that the client device **102** should obtain Asset C **203** from a content server **106** at address CDN. The distribution server relays this information to the client device **102** as indicated at **204**. As indicated at **206**, the client device **102** may then use this information to send a request **205** for Asset C **203** to the content server **106** at address CDN. In response, the content server **106** sends asset C **203** to the client device. The client device may then replace Asset A with Asset C **203** in the cache **122**, as shown at **208**.

Subsequently, the client device **102** may request asset information for content space Sp2 from the distribution server **104** as indicated at **210**. In this example, the distribution server sends a response indicating that Asset D **207** may be obtained from the content server **106** at network address CDN. At **214**, the client device sends a request **209** for Asset D **207**. The client device is often configured such that if it receives no reply to a request for asset information for a content space, it will use cached assets to generate content for the space. However, client device **102** generally has no way to determine whether the cached assets are consistent with each other. For example, Asset B and Asset C may be used to generate conflicting advertisements, which would be displayed at **216**. However, to determine that these two or more cached content assets may produce a conflict, the client device **102** would have to be programmed with rules governing conflicting content. Since the number of potentially conflicting assets and conflict rules may be very large this can be an awkward and difficult solution to implement. The difficulty may be further compounded if the rules change over time and/or if the rules must be distributed regularly to a large number of client devices.

In some cases, the client device may have benign content assets stored in a mass storage device **124** that may be displayed if no other content is available (e.g., if no other content assets are stored in the cache **122**). Such assets may generate benign content that is configured in advance such that does not present a conflict with any other content. By way of example, benign content Assets E and F may be used to generate advertisements that never present a conflict. For example, the client device **102** may use Assets E and F may to generate advertisements promoting the manufacturer of the client device **102**. The manufacturer may have agreed in advance with other advertisers that such advertisements do not present a conflict. Unfortunately, such advertisements may not generate advertising revenue for the manufacturer of the client device. Therefore it may be desirable to avoid displaying benign assets unless absolutely necessary.

The above example illustrates the general problem of cache consistency management. The nature of the problem, as seen from the above example, is that content assets cached on a client device may be inconsistent due to frequent updates and intermittent interruptions in network communication. Cached content assets may be inconsistent in many different ways. For example, the content generated by the cached content assets may simply be out of date or no longer valid.

One way in which cached content assets may be inconsistent can occur if a download is interrupted by an application, such as a game. For example, many games will allow a fixed amount of time for new assets to be downloaded. For example, games might only allow new assets to be downloaded while the next level of game content is loaded from a mass storage device such as a Blu-Ray drive. Once all game content has been loaded, the game may interrupt the asset downloading (a client library may allow a game to perform this interruption). This may stop an asset download regardless of whether it has been completed. Since the download speed of internet connections may vary widely, different client devices **102** may take different amounts of time to download the newest assets. However, all client devices **102** of the same type, e.g., specific models of a particular game console, typically load game content assets at the same speed, implying that some client devices may successfully download all new assets while others may only download a portion of the newest assets before being interrupted.

Cached content assets may also be inconsistent, e.g., if the distribution servers **104** or content servers **106** are under heavy network load. When servers are over burdened with requests from client devices **102**, a server may appear to be unavailable to a particular client device **102**. Consequently, a request for content information from a distribution server **104** or a request for assets from a content server **106** may randomly fail due to high network load at the server.

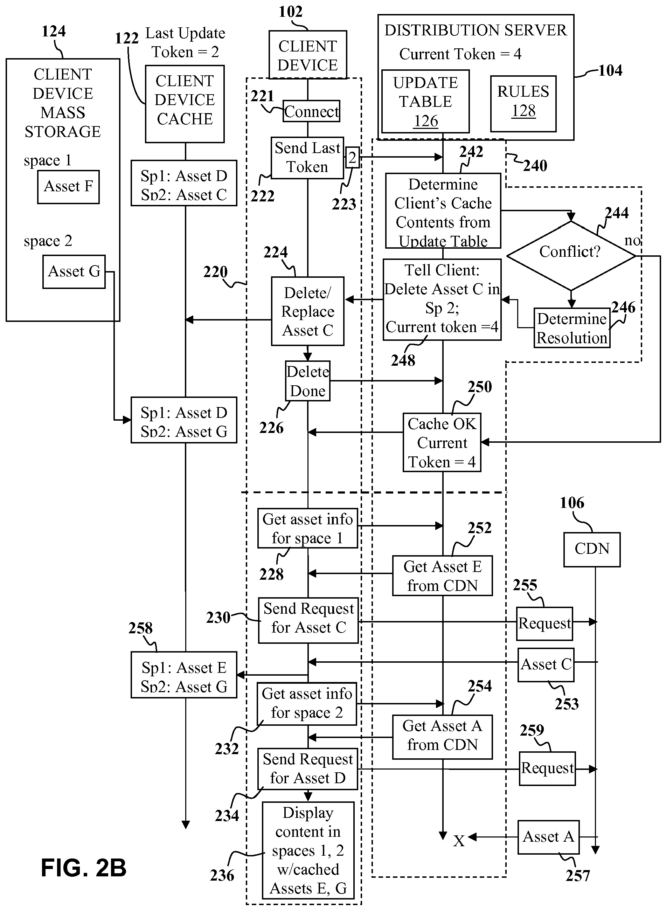

To overcome such problems, embodiments of the present invention implement certain aspects of management consistency of content assets cached on a client device using the distribution server. By way of example, as shown in FIG. 2B, the distribution server **104** may have an update table **126** stored in memory. The update table may be configured to keep track of which content assets are associated with different content spaces at each update. A token value is associated with each update. Each time the content is to be updated on the client device **102**, the distribution server sends the client device the token value that is associated with the update. The update table **126** includes information from which the distribution server **104** may determine which content assets might currently be stored in the client device's cache **122** as of that update token value. For example, the update table may indicate a plurality of listings indicating which content assets are to be cached for particular content spaces as of each update token value.

By way of example, the update table **126** may be configured as shown in Table I below.

**TABLE I**

| Token Value | Sp 1 | Sp2 | ... |
|---|---|---|---|
| 0 | Asset A | Asset B | ... |
| 1 | Asset A | Asset C | ... |
| 2 | Asset D | Asset C | ... |
| 3 | Asset D | Asset A | ... |
| 4 | Asset E | Asset A | ... |
| 5 | ... | ... | ... |

The distribution server **104** may further have a set of conflict rules **128** stored in memory. The conflict rules **128** may be configured to prevent assets for two or more conflicting content items being stored in the client device cache **122** at substantially the same time. Furthermore, the conflict rules **128** may be configured to prevent the client device **102** from displaying two or more conflicting content items. By way of example, the rules may be implemented as by performing a lookup in one or more conflict tables, which may be organized as shown in Table II below.

**TABLE II**

| Asset | A | B | C | D | E | F | G |
|---|---|---|---|---|---|---|---|
| A | OK | OK | OK | OK | OK | OK | OK |
| B | OK | OK | OK | OK | OK | OK | OK |
| C | OK | OK | OK | OK | Conflict | OK | OK |
| D | OK | OK | OK | OK | OK | OK | OK |
| E | OK | OK | Conflict | OK | OK | OK | OK |
| F | OK | OK | OK | OK | OK | OK | OK |
| G | OK | OK | OK | OK | OK | OK | OK |

According to the example illustrated in Table II, Asset C and Asset E conflict. All other combinations of assets in the cache are permitted. It is assumed, for simplicity's sake, that an asset never conflicts with itself. A two-dimensional cross-reference table is used to illustrate the concept of conflicts between pairs of assets. The concept may be generalized to cross-reference tables in three or more dimensions to establish conflict rules for combinations of three or more assets.

Conflict rules for the system **100** may be managed via the campaign management servers **110** and distributed over the network **101** to the distribution servers **104**. The campaign management servers **110** may also regularly update the conflict rules and transmit such updates to distribution servers via the network **101**.

According to an embodiment of the invention, consistency of content assets stored in a cache **122** on a client device **102** may be managed as illustrated in FIG. 2B. The client device **102** and distribution server **104** may be configured, e.g., by suitable programming to implement cache consistency management before the client device **102** updates content assets stored in its cache **122**. Specifically, the client device **102** may be programmed to implement a sequence of client-side operations **220** and the distribution server **104** may be programmed to implement a sequence of distribution-side operations **240**. Specifically, after connecting to the distribution server **104** at **221**, the client device **102** sends an update token **223** to the distribution server **104**, as indicated at **222**. The update token **223** has a value associated with it that indicates the most recent update that the client device **102** has implemented or attempted to implement. The distribution server **104** can then identify one or more content assets stored in the cache **122** using the update token value **223** and the update table **126**, as indicated at **242**. By way of example, if the client device **102** sends token **223** having a token value of two, the distribution server **104** may perform a lookup in the update table **126** to determine that the cache **122** might contain Asset D for content space Sp1 and Asset C for content space Sp2.

Subsequently, as indicated at **244,** the distribution server **104** may determine whether a potential conflict exists between any of the assets that might be stored in the cache **122** and any assets in an update list determined from a token value for a current update and the update table **126**. If it is determined that a conflict exists, at **246** the distribution server **104** may determine a resolution to the conflict that involves deleting one or more potentially conflicting assets from the cache **122**. The distribution server **104** may then send an instruction **248** to the client device **102** to delete the one or more conflicting assets. The instruction **248** may include the current update token value and the client device **102** may reset its update token value to this updated value. In response to the instruction **248**, the client device **102** may delete the potentially conflicting content assets from the cache **122**, as indicated at **224**. The client device **102** may notify the distribution server **104** that the deletion has been completed as indicated at **226**. In response, the distribution server **104** may send an update signal **250** to the client device **102**. The update signal **250** may be configured to configured to permit the client device **102** to proceed with an update of the content assets in the cache **122**, e.g., along the lines described above with respect to FIG. 2B. If instead, it is determined that no potential conflict exists, the distribution server **104** may simply send the update signal **250** to the client device **102**. The update signal **250** may optionally include the current update token value and the client device **102** may reset its update token value accordingly.

By way of example, suppose the current update token value for the distribution server **104** is token value 4. If the update table **126** is configured as in Table I, above, the distribution server **104** may determine that this update could place Asset E for content space Sp1 and Asset A for content space Sp2 in the cache **122**. If the conflict rules **128** are configured, e.g., as in Table II, at **244** the distribution server **104** may determine from conflict rules **128** that Asset C and Asset E conflict and may a potential conflict may exist if Asset D is replaced with asset E but Asset C is not replaced with Asset A. The instruction **248** may therefore tell the client device **102** to delete Asset C from the cache **122**.

The advantage of managing cache consistency in this manner may be seen by following an example of an update that follows cache consistency management. Again referring to FIG. 2B, the client device **102** may send the distribution server **104** a request for asset information as indicated at **228**. The distribution server **104** may respond to the request with asset information, as indicated at **252**. The asset information may identify update assets and a source of the update assets, e.g., as described above. By way of example, the distribution server may determine from the update table **126** and the current update token value of 4 that the client device **102** should obtain Asset E **253** from a content server **106** at address CDN. The distribution server **104** may relays this information to the client device **102** as indicated at **252.** As indicated at **230,** the client device **102** may then use this information to send a request **255** for Asset E **253** to the content server **106** at address CDN. In response, the content server **106** sends asset E **253** to the client device **102**. The client device **102** may then replace Asset D with Asset E **253** in the cache **122**, as shown at **258**. Subsequently, the client device **102** may request asset information for content space Sp2 from the distribution server **104** as indicated at **232.** In this example, the distribution server sends a response indicating that Asset A **257** may be obtained from the content server **106** at network address CDN. At **234**, the client device sends a request **259** for Asset A **257**. If the client device **102** never receives Asset D, e.g., due to a network outage, any potential for conflict between asset C and Asset E will have been avoided by the prior deletion of Asset C from the cache **122** at **224.**

As discussed above, the client device **102** may be configured to replace content assets deleted from the cache **122** with benign assets from the mass storage **124**. This ensures that client device **102** will have some content cached for display in content spaces in the event of a network outage. For example, after deleting Asset C at **224**, the client device **102** may optionally copy benign Asset G from the mass storage device **124** to the cache **122** for content space Sp2. The client device **102** may then display content in content spaces Sp1 and Sp2 generated using Asset E and Asset G respectively as indicated at **236**.

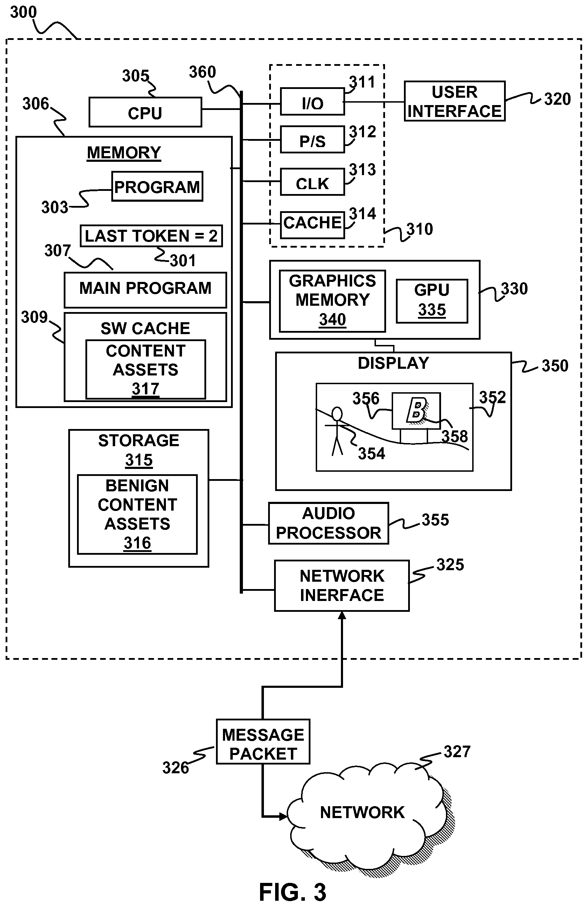

By way of example, the client devices **102** in the system **100** may be configured as shown in FIG. 3. FIG. 3 is a block diagram illustrating the components of a client device **300** according to an embodiment of the present invention. By way of example, and without loss of generality, the client device **300** may be implemented as a computer system, such as a personal computer, video game console, personal digital assistant, or other digital device, suitable for practicing an embodiment of the invention. The client device **300** may include a central processing unit (CPU) **305** configured to run software applications and optionally an operating system. The CPU **305** may include one or more processing cores. By way of example and without limitation, the CPU **305** may be a parallel processor module, such as a Cell Processor. An example of a Cell Processor architecture is described in detail, e.g., in Cell Broadband Engine Architecture, copyright International Business Machines Corporation, Sony Computer Entertainment Incorporated, Toshiba Corporation August 8, 2005 a copy of which may be downloaded at http://cell.scei.co.jp/, the entire contents of which are incorporated herein by reference.

A memory **306** is coupled to the CPU **305**. The memory **306** may store applications and data for use by the CPU **305**. The memory **306** may be in the form of an integrated circuit, e.g., RAM, DRAM, ROM, and the like). A computer program **303** may be stored in the memory **306** in the form of instructions that can be executed on the processor **305**. The instructions of the program **303** may be configured to implement, amongst other things, certain steps of a method for managing consistency of cached content, e.g., as described above with respect to client-side operations **220** in FIG. 2B. By way of example, the program **303** may include instructions to send an update token value **301** to a distribution server. The token value **301** may be embedded in the memory **306** and may be updated by the program **303** when a new value is received from the distribution server. The program may also include instructions to delete one or more content assets from a cache in response to an instruction from the distribution server; and/or update the content assets stored in the cache following receipt of an update signal from the distribution server. The program **303** may operate in conjunction with one or more instructions configured to implement an interactive environment. By way of example, such instructions may be part of a main program **307**, such as a video game program. The main program **307** may call the program **303**, e.g., as a function or subroutine. Alternatively, the main program **307** may be a program for interfacing with a virtual world. Virtual worlds are described in commonly assigned U.S. Patent Applications 11/682,281, 11/682,284, 11/682,287, 11/682,292, 11/682,298, and 11/682,299, the contents of all of which are incorporated herein by reference.

The client device **300** may also include well-known support functions **310**, such as input/output (I/O) elements **311**, power supplies (P/S) **312**, a clock (CLK) **313** and cache **314**. The client device **300** may further include a storage device **315** that provides non-volatile storage for applications and data. The storage device **315** may be used for temporary or long-term storage of auxiliary content assets **316** downloaded from a content server. By way of example, the storage device **315** may be a fixed disk drive, removable disk drive, flash memory device, tape drive, CD-ROM, DVD-ROM, Blu-ray, HD-DVD, UMD, or other optical storage devices.

The cache **314** may be a readily accessible memory hardware component that is separate and distinct from the main memory **306**. In such a case, the cache **314** is sometimes referred to as a hardware cache. The memory **306** may also include a reserved and readily accessible region **309** sometimes referred to as a software cache. Content assets **317** may be stored in such a software cache. By way of example, the content assets **317** may be auxiliary content assets, such as advertising content assets. In some cases, e.g., wherein the storage device **315** is a disk drive or other storage device whose stored data may be overwritten, a software cache may be implemented using a specially, reserved region of the storage device **315**. Although the content assets **317** are shown as being stored in a software cache **309** within the main memory, in embodiments of the invention the content assets **317** may alternatively be stored in the hardware cache **314** or within a software cache implemented using the storage device **315**.

One or more user input devices **320** may be used to communicate user inputs from one or more users to the computer client device **300**. By way of example, one or more of the user input devices **320** may be coupled to the client device **300** via the I/O elements **311**. Examples of suitable input device **320** include keyboards, mice, joysticks, touch pads, touch screens, light pens, still or video cameras, and/or microphones. The client device **300** may include a network interface **325** to facilitate communication via an electronic communications network **327**. The network interface **325** may be configured to implement wired or wireless communication over local area networks and wide area networks such as the Internet. The client device **300** may send and receive data and/or requests for files via one or more message packets **326** over the network **327**.

The client device **300** may further comprise a graphics subsystem **330**, which may include a graphics processing unit (GPU) **335** and graphics memory **340**. The graphics memory **340** may include a display memory (e.g., a frame buffer) used for storing pixel data for each pixel of an output image. The graphics memory **340** may be integrated in the same device as the GPU **335**, connected as a separate device with GPU **335**, and/or implemented within the memory **306**. Pixel data may be provided to the graphics memory **340** directly from the CPU **305**. Alternatively, the CPU **305** may provide the GPU **335** with data and/or instructions defining the desired output images, from which the GPU **335** may generate the pixel data of one or more output images. The GPU **335** may generate portions of the content of such output images using the content assets **317** stored in the software cache **309** or the hardware cache **314**. The data and/or instructions defining the desired output images may be stored in memory **310** and/or graphics memory **340**. In an embodiment, the GPU **335** may be configured (e.g., by suitable programming or hardware configuration) with 3D rendering capabilities for generating pixel data for output images from instructions and data defining the geometry, lighting, shading, texturing, motion, and/or camera parameters for a scene. The GPU **335** may further include one or more programmable execution units capable of executing shader programs.

The graphics subsystem **330** may periodically output pixel data for an image from the graphics memory **340** to be displayed on a display device **350**. The display device **350** may be any device capable of displaying visual information in response to a signal from the client device **300**, including CRT, LCD, plasma, and OLED displays. The computer client device **300** may provide the display device **350** with an analog or digital signal. By way of example, the display **350** may include a cathode ray tube (CRT) or flat panel screen that displays content, e.g., in the form of text, numerals, graphical symbols, images or video. Such content may include, e.g., one or more images representing a simulated environment **352** such as a video game or virtual world. In such an environment, a user may be represented by an avatar **354**. Examples of avatars are described, e.g., in commonly assigned U.S. Patent Applications 11/682,281, 11/682,284, 11/682,287, 11/682,292, 11/682,298, and 11/682,299, which have been incorporated herein by reference. The simulated environment may contain one or more auxiliary content spaces **356** in which auxiliary content **358** may be displayed. The auxiliary content may be generated using the cached assets **317**.

In addition, the display **350** may include one or more audio speakers that produce audible or otherwise detectable sounds. To facilitate generation of such sounds, the client device **300** may further include an audio processor **355** adapted to generate analog or digital audio output from instructions and/or data provided by the CPU **305**, memory **306**, and/or storage **315**.

The components of the client device **300**, including the CPU **305**, memory **306**, support functions **310**, data storage **315**, user input devices **320**, network interface **325**, and audio processor **355** may be operably connected to each other via one or more data buses **360**. These components may be implemented in hardware, software or firmware or some combination of two or more of these.

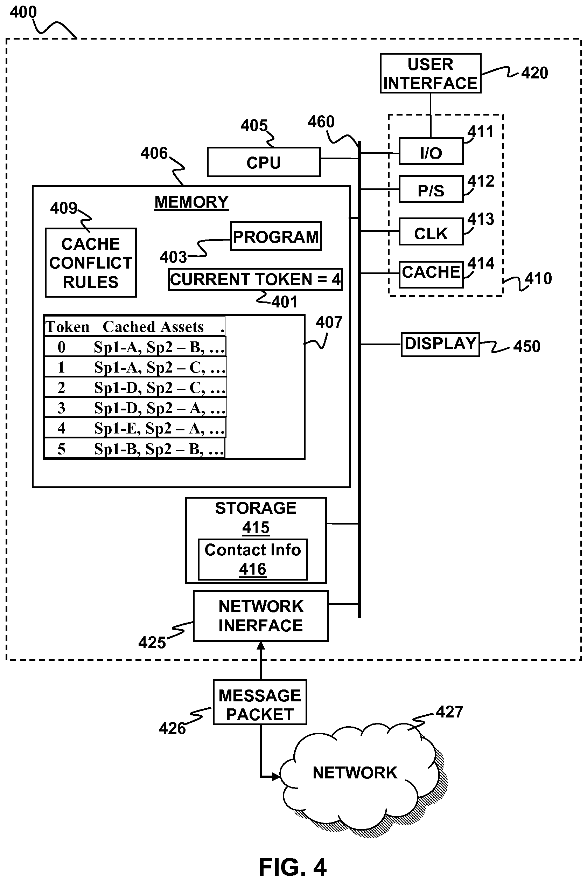

By way of example, and without loss of generality, the distribution servers **104** in the system **100** may be configured as shown in FIG. 4. According to an embodiment of the present invention, a distribution server **400** may be implemented as a computer system or other digital device. The distribution server **400** may include a central processing unit (CPU) **405** configured to run software applications and optionally an operating system. The CPU **405** may include one or more processing cores. By way of example and without limitation, the CPU **405** may be a parallel processor module, such as a Cell Processor.

A memory **406** is coupled to the CPU **405**. The memory **406** may store applications and data for use by the CPU **405**. The memory **406** may be in the form of an integrated circuit, e.g., RAM, DRAM, ROM, and the like). A computer program **403** may be stored in the memory **406** in the form of instructions that can be executed on the processor **405**. A current update value **401** may be stored in the memory **406**. In addition an update table **407** and cache conflict rules **409** may be embodied in the memory **406**. By way of example, and without loss of generality, the conflict rules may be implemented as a lookup table, e.g., as described above with respect to Table II. The instructions of the program **403** may be configured to implement, amongst other things, certain steps of a method for cached content consistency management, e.g., as described above with respect to the distribution-side operations **240** in FIG. 2B. Specifically, the distribution server **400** may be configured, e.g., through appropriate programming of the program **403**, to a) receive an update token value from a client device b) identify one or more content assets stored in a cache associated with the client device using the update token value and a current update token value **401**; c) determine whether a potential conflict exists between any of the one or more assets stored in the cache and any of one or more assets in an update list determined from a current update token value and the update table; and; d) if it is determined at c) that a conflict exists, determine a resolution to the conflict that involves deleting one or more potentially conflicting assets from the client device's cache, and send an instruction to the client device to delete the one or more conflicting assets and/or e) notify the client device to proceed with an update of the content assets if it is determined at c) that no potential conflict exists. The potential for a conflict may be determined using the update table **407** and the conflict rules **409**.

The distribution server **400** may also include well-known support functions **410**, such as input/output (I/O) elements **411**, power supplies (P/S) **412**, a clock (CLK) **413** and cache **414**. The mediation server **400** may further include a storage device **415** that provides non-volatile storage for applications and data. The storage device **415** may be used for temporary or long-term storage of contact information **416** such as distribution server addresses and cryptographic keys. By way of example, the storage device **415** may be a fixed disk drive, removable disk drive, flash memory device, tape drive, CD-ROM, DVD-ROM, Blu-ray, HD-DVD, UMD, or other optical storage devices.

One or more user input devices **420** may be used to communicate user inputs from one or more users to the mediation server **400**. By way of example, one or more of the user input devices **420** may be coupled to the mediation server **400** via the I/O elements **411**. Examples of suitable input device **420** include keyboards, mice, joysticks, touch pads, touch screens, light pens, still or video cameras, and/or microphones. The mediation server **400** may include a network interface **425** to facilitate communication via an electronic communications network **427**. The network interface **425** may be configured to implement wired or wireless communication over local area networks and wide area networks such as the Internet. The mediation server **400** may send and receive data and/or requests for files via one or more message packets **426** over the network **427**.

The components of the distribution server **400**, including the CPU **405**, memory **406**, support functions **410**, data storage **415**, user input devices **420**, and network interface **425**, may be operably connected to each other via one or more data buses **460**. These components may be implemented in hardware, software or firmware or some combination of two or more of these.

Embodiments of the present invention facilitate management of consistency of content assets cached on a client device without placing an undue burden for such management on the client device itself. By off-loading the responsibility for cache consistency management to a remote server, using token values to keep track of updates and performing cache consistency management prior to updates, embodiments of the present invention can avoid caching of potentially conflicting content assets.

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise. The appended claims are not to be interpreted as including means-plus-function limitations, unless such a limitation is explicitly recited in a given claim using the phrase "means for."

## Claims

1. A
method for managing consistency of content assets stored in a cache (122) on a client device, the method comprising:
a) sending (222) an update token (223) value for the client device to a distribution server; (104)
b) identifying one or more content assets stored in the cache using the update token value and an update table (126) stored in a memory associated with the distribution server;
c) determining (244) with the distribution server whether a potential conflict exists between any of the one or more assets stored in the cache and any of one or more assets in an update list determined from a current update token value and the update table; and
d) if it is determined at c) that a conflict exists, determining (246) a resolution to the conflict that involves deleting (224) one or more potentially conflicting assets from the cache, sending (248) an instruction from the distribution server to the client device to delete the one or more conflicting assets, and deleting one or more potentially conflicting content assets from the cache with the client device in response to the instruction from the distribution server; and
e) sending an update signal (250) from the distribution server to the client device if it is determined at c) that no potential conflict exists, wherein the update signal is configured to permit the client device to proceed with an update of the content assets; and
f) updating the content assets stored in the cache.

2. The method of claim 1, wherein d) or e) further comprises sending the current update token value from the distribution server to the client device and changing the update token value to the current update token value.

3. The method of claim 1, wherein d) further comprises: after deleting the one or more content assets from the cache, sending a message from the client device to the distribution server, wherein the message indicates that the one or more content assets have been deleted.

4. The method of claim 1, wherein d) further comprises replacing the one or more contents with one or more corresponding replacement assets stored on storage device (124) associated with the client device.

5. The method of claim 1, wherein f) comprises:
after d) or e) sending an information request for an update to the content assets stored in the cache from the client device to the distribution server.

6. The method of claim 5, wherein f) further comprises sending content asset update information from the distribution server to the client device in response to the information request.

7. The method of claim 6, wherein f) further comprises sending an asset request to the one or more sources, wherein the asset request includes the content asset update information.

8. The method of claim 1, further comprising displaying content with the client device using the content assets stored in the cache.

9. The method of claim 1, wherein d) or e) further comprises sending the current update token value from the distribution server to the client device.

10. The method of claim 1, wherein d) further comprises sending the update signal from the distribution server to the client device after the distribution server receives confirmation from the client device that the potentially conflicting assets have been deleted from the cache, wherein the message is configured to instruct the client device to proceed with an update of the content assets.

11. The method of claim 1, wherein the content assets include one or more auxiliary content assets.

12. The method of claim 1, wherein the auxiliary content assets include one or more advertising content assets.

13. The method of claim 1, wherein c) includes comparing the content assets identified at b) against the assets in the update list using one or more conflict rules (128).

14. A cached content consistency management system, comprising:
a distribution server, having a memory with an update table embodied therein; and
a client device having a cache,
wherein the client device and distribution server are configured to communicate with each other over a network;
wherein the distribution server is configured to:
1) receive an update token value from the client device;
2) identify one or more content assets stored in the cache using the update token value and the update table;
3) determine whether a potential conflict exists between any of the one or more assets stored in the cache and any of one or more assets in an update list determined from a current update token value and the update table; and either
4) if it is determined at 3) that a conflict exists, determine a resolution to the conflict that involves deleting one or more potentially conflicting assets from the cache, and sending a delete instruction to the client device instructing the client device to delete the one or more conflicting assets, or
5) send an update signal to the client device instructing the client device to proceed with an update of the content assets if it is determined at 3) that no potential conflict exists;
wherein each client device is configured to,
a) send the update token value to a distribution server; and either
b) delete one or more content assets from the cache in response to the delete instruction from the distribution server; or
c) update the content assets stored in the cache upon receipt of the update signal from the distribution server.

15. The system of claim 14, wherein the distribution server and client device are configured to implement the method set forth in any of claims 1 to 13.

## Patentansprüche

1. Verfahren zum Verwalten der Konsistenz von Content-Assets, die in einem Cache (122) auf einem Client-Gerät gespeichert sind, wobei das Verfahren Folgendes umfasst:
a) Senden (222) eines Aktualisierungstokenwerts (223) für das Client-Gerät zu einem Verteilungsserver (104);
b) Identifizieren von einem oder mehreren in dem Cache gespeicherten Content-Assets mithilfe des Aktualisierungstokenwerts und einer Aktualisierungstabelle (126), die in einem mit dem Verteilungsserver verbundenen Speicher gespeichert sind;
c) Bestimmen (244) mit dem Verteilungsserver, ob ein potenzieller Konflikt zwischen irgendeinem der ein oder mehreren in dem Cache gespeicherten Assets und irgendeinem der ein oder mehreren Assets in einer Aktualisierungsliste existiert, der anhand eines aktuellen Aktualisierungstokenwerts und der Aktualisierungstabelle festgestellt wird; und
d) falls bei c) festgestellt wird, dass ein Konflikt existiert, Bestimmen (246) einer Lösung des Konflikts, die Löschen (224) von einem oder mehreren potenziell kollidierenden Assets aus dem Cache, Senden (248) einer Anweisung von dem Verteilungsserver zu dem Client-Gerät zum Löschen der ein oder mehreren kollidierenden Assets, und Löschen von einem oder mehreren potenziell kollidierenden Content-Assets aus dem Cache mit dem Client-Gerät in Reaktion auf die Anweisung vom Verteilungsserver beinhaltet; und
e) Senden eines Aktualisierungssignals (250) von dem Verteilungsserver zu dem Client-Gerät, falls bei c) festgestellt wird, dass kein potenzieller Konflikt existiert, wobei das Aktualisierungssignal dazu ausgelegt ist, dem Client-Gerät zu erlauben, mit einer Aktualisierung der Content-Assets fortzufahren; und
f) Aktualisieren der in dem Cache gespeicherten Content-Assets.

2. Verfahren nach Anspruch 1, wobei d) oder e) ferner Senden des aktuellen Aktualisierungstokenwerts von dem Verteilungsserver zu dem Client-Gerät und Ändern des Aktualisierungstokenwerts zu dem aktuellen Aktualisierungstokenwert umfasst.

3. Verfahren nach Anspruch 1, wobei d) ferner Folgendes umfasst: nach dem Löschen der ein oder mehreren Content-Assets aus dem Cache, Senden einer Nachricht von dem Client-Gerät zu dem Verteilungsserver, wobei die Nachricht angibt, dass die ein oder mehreren Content-Assets gelöscht worden sind.

4. Verfahren nach Anspruch 1, wobei d) ferner Ersetzen der ein oder mehreren Inhalte durch ein oder mehrere entsprechende Ersatz-Assets, die in einem mit dem Client-Gerät verbundenen Speichergerät (124) gespeichert sind, umfasst.

5. Verfahren nach Anspruch 1, wobei f) Folgendes umfasst:
nach d) oder e), Senden einer Informationsanfrage nach einer Aktualisierung der in dem Cache gespeicherten Content-Assets von dem Client-Gerät zu dem Verteilungsserver.

6. Verfahren nach Anspruch 5, wobei f) ferner Senden von Content-Asset-Aktualisierungsinformationen von dem Verteilungsserver zu dem Client-Gerät in Reaktion auf die Informationsanfrage umfasst.

7. Verfahren nach Anspruch 6, wobei f) ferner Senden einer Asset-Anfrage zu den ein oder mehreren Quellen umfasst, wobei die Asset-Anfrage die Content-Asset-Aktualisierungsinformationen einschließt.

8. Verfahren nach Anspruch 1, das ferner Anzeigen von Inhalten mit dem Client-Gerät unter Verwendung der in dem Cache gespeicherten Content-Assets umfasst.

9. Verfahren nach Anspruch 1, wobei d) oder e) ferner Senden des aktuellen Aktualisierungstokenwerts von dem Verteilungsserver zu dem Client-Gerät umfasst.

10. Verfahren nach Anspruch 1, wobei d) ferner Senden des Aktualisierungssignals von dem Verteilungsserver zu dem Client-Gerät umfasst, nachdem der Verteilungsserver eine Bestätigung von dem Client-Gerät erhalten hat, dass die potenziell kollidierenden Assets aus dem Cache gelöscht worden sind, wobei die Nachricht dazu ausgelegt ist, das Client-Gerät anzuweisen, mit einer Aktualisierung der Content-Assets fortzufahren.

11. Verfahren nach Anspruch 1, wobei die Content-Assets ein oder mehrere zusätzliche Content-Assets einschließen.

12. Verfahren nach Anspruch 1, wobei die zusätzlichen Content-Assets ein oder mehrere Werbungs-Content-Assets einschließen.

13. Verfahren nach Anspruch 1, wobei c) Vergleichen der bei b) identifizierten Content-Assets mit den Assets in der Aktualisierungsliste unter Verwendung von ein oder mehreren Konfliktregeln (128) einschließt.

14. Konsistenzverwaltungssystem für gecachte Inhalte, das Folgendes umfasst:
einen Verteilungsserver, der einen Speicher mit einer darin integrierten Aktualisierungstabelle aufweist; und
ein Client-Gerät, das einen Cache aufweist,
wobei das Client-Gerät und der Verteilungsserver dazu ausgelegt sind, über ein Netzwerk miteinander zu kommunizieren;
wobei der Verteilungsserver für Folgendes ausgelegt ist:
1) Empfangen eines Aktualisierungstokenwerts von dem Client-Gerät;
2) Identifizieren von ein oder mehreren in dem Cache gespeicherten Content-Assets mithilfe des Aktualisierungstokenwerts und der Aktualisierungstabelle;
3) Bestimmen, ob ein potenzieller Konflikt zwischen irgendeinem der ein oder mehreren in dem Cache gespeicherten Assets und irgendeinem der ein oder mehreren Assets in einer Aktualisierungsliste existiert, der anhand eines aktuellen Aktualisierungstokenwerts und der Aktualisierungstabelle bestimmt wird; und entweder
4) falls bei 3) festgestellt wird, dass ein Konflikt existiert, Bestimmen einer Lösung des Konflikts, die Löschen von ein oder mehreren potenziell kollidierenden Assets aus dem Cache und Senden einer Löschungsanweisung zu dem Client-Gerät, die das Client-Gerät anweist, die ein oder mehreren kollidierenden Assets zu löschen, beinhaltet, oder
5) Senden eines Aktualisierungssignals zu dem Client-Gerät, welches das Client-Gerät anweist, mit einer Aktualisierung der Content-Assets fortzufahren, falls bei 3) festgestellt wird, dass kein potenzieller Konflikt existiert;
wobei jedes Client-Gerät dazu ausgelegt ist,
a) einen Aktualisierungstokenwert zu einem Verteilungsserver zu senden; und entweder
b) ein oder mehrere Content-Assets in Reaktion auf die Löschungsanweisung von dem Verteilungsserver aus dem Cache zu löschen; oder
c) die in dem Cache gespeicherten Content-Assets auf Empfang des Aktualisierungssignals von dem Verteilungsserver zu aktualisieren.

15. System nach Anspruch 14, wobei der Verteilungsserver und das Client-Gerät dazu ausgelegt sind, das in einem der Ansprüche 1 bis 13 dargelegte Verfahren zu implementieren.

## Revendications

1. Procédé de gestion de la cohérence d'actifs de contenu stockés dans une mémoire cache (122) sur un dispositif client, le procédé comprenant de :
a) envoyer (222) une valeur de jeton de mise à jour (223) pour le dispositif client à un serveur de distribution;
b) identifier un ou plusieurs actifs de contenu stockés dans la mémoire cache en utilisant la valeur de jeton de mise à jour et une table de mise à jour (126) stockée dans une mémoire associée au serveur de distribution;
c) déterminer (244) avec le serveur de distribution s'il existe un conflit potentiel entre l'un des un ou plusieurs actifs stockés dans la mémoire cache et l'un d'un ou plusieurs actifs dans une liste de mise à jour déterminée à partir d'une valeur de jeton de mise à jour actuelle et de la table de mise à jour; et
d) s'il est déterminé en c) qu'il existe un conflit, déterminer (246) une résolution du conflit qui implique de supprimer (224) un ou plusieurs actifs potentiellement en conflit de la mémoire cache, envoyer (248) une instruction à partir du serveur de distribution au dispositif client pour supprimer lesdits un ou plusieurs actifs en conflit, et supprimer un ou plusieurs actifs de contenu potentiellement en conflit de la mémoire cache avec le dispositif client en réponse à l'instruction du serveur de distribution; et
e) envoyer un signal de mise à jour (250) à partir du serveur de distribution au dispositif client s'il est déterminé en c) qu'aucun conflit potentiel n'existe, dans lequel le signal de mise à jour est configuré pour permettre au dispositif client de procéder à une mise à jour des actifs de contenu; et
f) mettre à jour les actifs de contenu stockés dans la mémoire cache.

2. Procédé selon la revendication 1, dans lequel d) ou e) comprend en outre d'envoyer la valeur de jeton de mise à jour actuelle à partir du serveur de distribution au dispositif client et de modifier la valeur de jeton de mise à jour par la valeur de jeton de mise à jour actuelle.

3. Procédé selon la revendication 1, dans lequel d) comprend en outre : après avoir supprimé les un ou plusieurs actifs de contenu de la mémoire cache, envoyer un message à partir du dispositif client au serveur de distribution, dans lequel le message indique que les un ou plusieurs actifs de contenu ont été supprimés.

4. Procédé selon la revendication 1, dans lequel d) comprend en outre de remplacer les un ou plusieurs actifs de contenu par un ou plusieurs actifs de remplacement correspondants stockés sur le dispositif de stockage (124) associé au dispositif client.

5. Procédé selon la revendication 1, dans lequel f) comprend de :
après d) ou e) envoyer une demande d'information pour une mise à jour des actifs de contenu stockés dans la mémoire cache à partir du dispositif client au serveur de distribution.

6. Procédé selon la revendication 5, dans lequel f) comprend en outre d'envoyer des informations de mise à jour d'actifs de contenu à partir du serveur de distribution au dispositif client en réponse à la demande d'information.

7. Procédé selon la revendication 6, dans lequel f) comprend en outre d'envoyer une demande d'actifs aux une ou plusieurs sources, dans lequel la demande d'actifs comprend les informations de mise à jour d'actifs de contenu.

8. Procédé selon la revendication 1, comprenant en outre d'afficher un contenu avec le dispositif client en utilisant les actifs de contenu stockés dans la mémoire cache.

9. Procédé selon la revendication 1, dans lequel d) ou e) comprend en outre d'envoyer la valeur de jeton de mise à jour actuelle à partir du serveur de distribution au dispositif client.

10. Procédé selon la revendication 1, dans lequel d) comprend en outre d'envoyer le signal de mise à jour à partir du serveur de distribution au dispositif client après que le serveur de distribution a reçu la confirmation du dispositif client que les actifs potentiellement en conflit ont été supprimés de la mémoire cache, dans lequel le message étant configuré pour ordonner au dispositif client de procéder à une mise à jour des actifs de contenu.

11. Procédé selon la revendication 1, dans lequel les actifs de contenu comprennent un ou plusieurs actifs de contenu auxiliaires.

12. Procédé selon la revendication 1, dans lequel les actifs de contenu auxiliaires comprennent un ou plusieurs actifs de contenu publicitaires.

13. Procédé selon la revendication 1, dans lequel c) comprend de comparer les actifs de contenu identifiés en b) avec les actifs de la liste de mise à jour en utilisant une ou plusieurs règles de conflit (128).

14. Système de gestion de cohérence de contenu mis en mémoire cache, comprenant :
un serveur de distribution, ayant une mémoire avec une table de mise à jour incorporée dans celle-ci; et
un dispositif client ayant une mémoire cache,
dans lequel le dispositif client et le serveur de distribution sont configurés pour communiquer l'un avec l'autre sur un réseau;
dans lequel le serveur de distribution est configuré pour :
1) recevoir une valeur de jeton de mise à jour à partir du dispositif client;
2) identifier un ou plusieurs actifs de contenu stockés dans la mémoire cache à l'aide de la valeur de jeton de mise à jour et de la table de mise à jour;
3) déterminer s'il existe un conflit potentiel entre l'un des un ou plusieurs actifs stockés dans la mémoire cache et l'un des un ou plusieurs actifs dans une liste de mise à jour déterminée à partir d'une valeur de jeton de mise à jour actuelle et de la table de mise à jour; et soit
4) s'il est déterminé en 3) qu'il existe un conflit, déterminer une résolution du conflit qui implique de supprimer un ou plusieurs actifs potentiellement en conflit de la mémoire cache, et envoyer une instruction de suppression au dispositif client ordonnant au dispositif client de supprimer les un ou plusieurs actifs plus en conflit, soit
5) envoyer un signal de mise à jour au dispositif client ordonnant au dispositif client de procéder à une mise à jour des actifs de contenu s'il est déterminé en 3) qu'aucun conflit potentiel n'existe;
dans lequel chaque dispositif client est configuré pour
a) envoyer la valeur de jeton de mise à jour à un serveur de distribution; et soit
b) supprimer un ou plusieurs actifs de contenu de la mémoire cache en réponse à l'instruction de suppression du serveur de distribution; soit
c) mettre à jour les actifs de contenu stockés dans la mémoire cache à la réception du signal de mise à jour à partir du serveur de distribution.

15. Système selon la revendication 14, dans lequel le serveur de distribution et le dispositif client sont configurés pour mettre en oeuvre le procédé décrit dans l'une quelconque des revendications 1 à 13.
